# EUROPEAN PATENT SPECIFICATION

(11) **EP 3 808 641 B1**
(45) Date of publication and mention of the grant of the patent: **15.01.2025**
(21) Application number: 20201950.1
(22) Date of filing: 15.10.2020
(51) Int. Cl.: B62J 1/00, B62J 1/26, B29C 45/14, B29C 45/16, B29L 31/30, B29K 21/00, B29K 105/12, B29K 623/00

(54) **METHOD OF MAKING A SADDLE AND RELATED SADDLE**
VERFAHREN ZUR HERSTELLUNG EINES SATTELS UND ZUGEHÖRIGER SATTEL
PROCÉDÉ DE FABRICATION D'UNE SELLE ET SELLE ASSOCIÉE

(30) Priority: 16.10.2019 IT 201900018995
(43) Date of publication of application: 21.04.2021
(73) Proprietor: SELLE ITALIA S.r.l., 31011 Asolo (TV) (IT)
(72) Inventor: PEROTTO, Riccardo, 31011 Asolo, Treviso (IT); BIGOLIN, Giuseppe, 31011 Asolo, Treviso (IT)
(74) Representative: Busana, Omar

(56) References cited:
- EP-A1- 1 857 247
- WO-A1-2005/051629
- WO-A1-99/37459
- DE-U1- 202011 052 479
- JP-A- H04 308 740

## Description

### FIELD OF APPLICATION

The present invention relates to a method of making a saddle and a related saddle. In particular, the present invention relates to a method of making a bicycle saddle.

### BACKGROUND ART

In this discussion, particular reference will be made to a bicycle saddle; however, the principles of the present invention may be applied in the same manner to saddles intended for a different use.

As it is known, bicycle saddles essentially comprise a frame, a shell, a padding and an outer coating.

The frame, whose functions are to allow the saddle to be connected to the saddle post and to act as a mechanical support for the shell, is normally made of metal or composite material. The shell, made of hard and rigid plastic material, is the element which gives rigidity to the saddle, acting as a support surface for the padding.

The padding, commonly made of polyurethane foam, is comprised between the shell and the outer coating.

As it is known, the method of making a saddle of this type comprises a first step in which a coating material is prepared inside a mould, which comprises a countershape surface with respect to the support surface of the saddle.

Once the coating material is positioned, it must be placed in contact with the countershape surface of the mould, in a manner as adherent as possible, so that it reproduces, in a precise manner, the surface of the mould itself. In this regard, the use of means adapted to create a vacuum (with a certain residual pressure) between the surface of the mould and the coating material is known, so that the latter adheres to the surface of the mould.

On the second half of the mould, which reproduces in negative the lower surface of the shell, a shell is positioned, so that the inner side thereof, which in use will face the padding, is visible.

Subsequently, a foamed material in liquid form, for example polyurethane, is poured onto the first half of the mould, and therefore onto the inner side of the coating material.

The mould is then closed, and the polyurethane is allowed to cure. In this case, the polyurethane foam acts as a padding and at the same time as a binder between the shell and the coating material.

The time required for curing the polyurethane foam is about six minutes. Once the curing is obtained, the mould may be opened and the saddle may be extracted from the mould itself.

At this point, operations, usually manual, may be necessary to trim the excess edges of the coating material.

Alternatively, it is possible to make the foam padding separately, with a method similar to the previous one, and then fix the various components together using specific adhesives or glues.

The background art, although widely appreciated, is not free from drawbacks both from the point of view of the production thereof and from the point of view of the comfort for the user.

The method of the background art requires very long cycle times, at least of about six minutes, the time necessary for the polyurethane foam to cure. To this cycle time, the times required to restore the equipment for the production of the next saddle must also be added.

Furthermore, this method involves multiple interventions of the operator since most of the steps are managed and carried out by specialized operators.

Furthermore, the use of glues or adhesives to fix the various components to one another creates a disadvantage in terms of environmental impact, both for the use of these substances themselves, and for the possible recyclability of the various materials with which the saddle is made.

From the point of view of the comfort of the saddle, there is an intrinsic inability of polyurethane to respond to tangential stresses since the reaction thereof to an applied stress is a simple compression. Therefore, it is not particularly adapted to accompany in an integral manner the translation of the pelvis/ischial bones of the user during use.

WO 99/37459 A1 and EP 1 857 247 disclose a method of making a saddle comprising a shell and a padding by arranging a shell in thermoplastic polymer inside a mould for injection moulding, comprising a die and a punch; said shell comprising a support surface, which in use faces said padding, and a support surface; said support surface being coupled to an inner wall of said punch or said die, said support surface forming a wall of the moulding cavity; closing the mould; making a padding by injection moulding a thermoplastic polymer over said shell, between said support surface and said mould.

### OVERVIEW OF THE INVENTION

Therefore, the need is felt to solve the drawbacks and limitations mentioned above with reference to the background art.

Therefore, the need is felt to make available a method of making a saddle which allows for very short cycle times, compared to the methods of the background art.

Furthermore, the need is felt for a method of making a saddle which is subject to limited manual operations by operators.

Furthermore, the need is felt for a method which does not involve the use of glues and adhesives, and which may therefore be an eco-sustainable method, using completely recyclable materials.

In addition, the need is felt for a saddle which is more comfortable than current saddles made with polyurethane foam.

In particular, a saddle which is more effective in accompanying in an integral manner the translation of the pelvis/ischial bones of the user during use.

Such requirements are, at least partially, met by a method of making a saddle according to claim 1, and by a related saddle in accordance with claim 10.

### DESCRIPTION OF THE DRAWINGS

Further features and advantages of the present invention will become more comprehensible from the following description of preferred embodiments thereof given by way of non-limiting examples, in which:

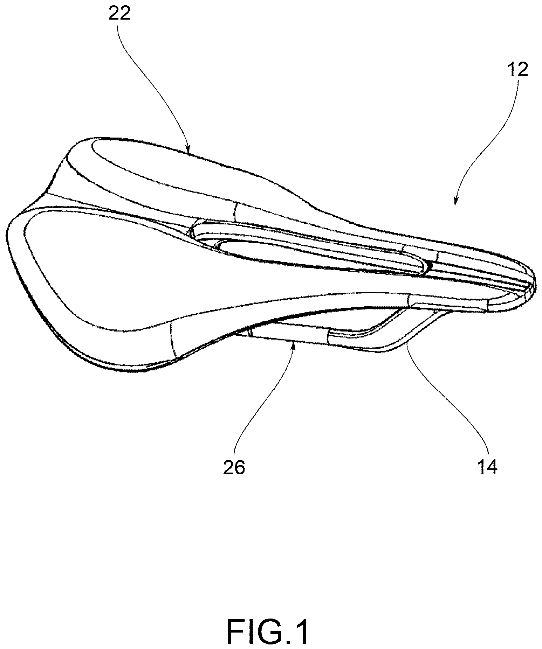

- Figure 1 diagrammatically shows a perspective view of a saddle
- Figure 2 diagrammatically shows a rear view of a saddle
- Figure 3 diagrammatically shows a perspective view of two components of the saddle
- Figure 4 diagrammatically shows a cross-section of a mould and of a saddle portion during a step of the method of making a saddle
- Figure 5 diagrammatically shows a cross-section of a mould and of a saddle during a step of the method of making a saddle
- Figure 6 diagrammatically shows a cross-section of a mould and of a saddle during a step of the method of making a saddle and
- Figures 7 and 8 diagrammatically show two saddle sections, wherein figure 7 shows a saddle section according to the invention.

Elements or parts in common to the embodiments described will be indicated hereafter using the same reference numerals.

### DETAILED DESCRIPTION

The method of making a saddle 12 comprising a shell 14 and a padding 22 according to the present invention comprises the steps as defined in appended claim 1.

The polymer used in step (c) may be a thermoplastic elastomer TPE.

According to a possible embodiment, the thermoplastic polymer used for the padding may be an SBS rubber (styrene-butadiene-styrene rubber).

According to a possible alternative embodiment, the thermoplastic material used for the padding may be the one marketed under the name PEBAX^{®}.

According to a first embodiment of the present invention, the padding has a uniform hardness. For example, the padding 22 may have a hardness between 5 and 60 shore A.

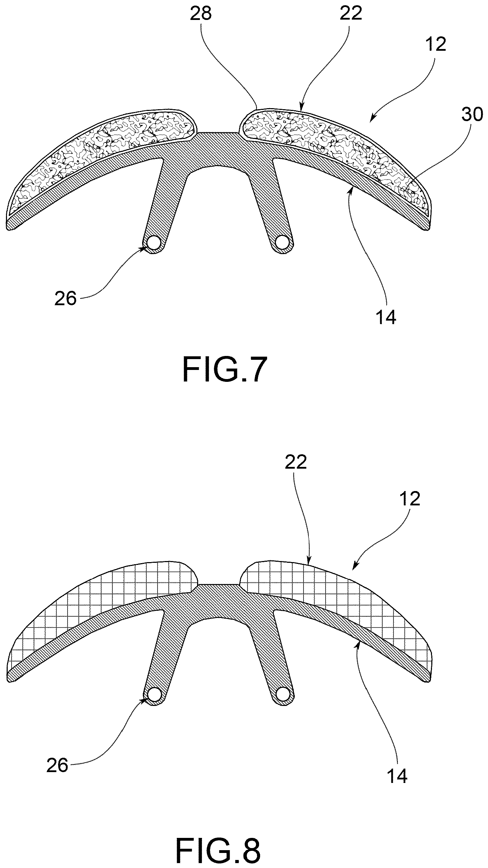

Therefore, in other words, the padding 22 may be made with a single thermoplastic polymer, as shown in the example of Figure 8.

According to a possible embodiment, the padding 22 may comprise an outer coating 28 having a hardness between 5 and 60 shore A, and an inner core 30 with a hardness lower with respect to the coating 28.

Advantageously, the inner core 30 may have a hardness between 0 and 5 shore A. Preferably, the inner core 30 may have a hardness around 0 shore A.

According to the invention, the padding 22 is made by co-injection moulding:
- a coating 28 which forms an outer coating 28 of the padding 22, and also forms the contact with the surface of the shell 14, and
- an inner core 30 with reduced hardness.

In other words, the padding 22 may be made with a coating 28 and an inner core 30 with a lower hardness.

The thermoplastic polymer with which the outermost layer of the padding is made, which in both cases corresponds to a material with a hardness between 5 and 60 shore A, allows the direct fixing of the padding material, by means of a chemical bond, to the shell 14.

In the case in which an inner core 30, with a reduced hardness, and in particular lower than 5 shore A, is provided, the coating 28 allows to effectively fix the polymer, with which the inner core 30 is formed, to the shell 14. In other words, the thermoplastic polymer with greater hardness allows the fixing to the shell 14, but also to the inner core 30, which it is therefore possible to exploit for the mechanical properties thereof.

Furthermore, the coating 28 made with a thermoplastic polymer, in particular SBS rubber having a hardness between 5 and 60 shore A, allows to obtain:
- wear resistance (determined, for example, by rubbing against the clothing of the user),
- impermeability;
- surface friction control, which may be varied according to specific requests, for example, by adding additives.

According to a possible embodiment of the present invention, the shell 14 is made of thermoplastic material with a high elastic modulus and a high hardness.

The shell 14 may be made of thermoplastic material, for example, of copolymer polypropylene.

The copolymer propylene used may possibly be of the loaded type. In particular, the copolymer polypropylene may be loaded with loads of a type *per* se known, such as fibreglass, carbon, and/or talc, etc.

Advantageously, the shell may be made of copolymer polypropylene loaded with a percentage of fibreglass between 5% and 15%, preferably around 10%.

In this case, the elastic modulus of a copolymer polypropylene loaded with a percentage of fibreglass of about 10% may have an elasticity modulus higher than 2000.

This solution of a copolymer polypropylene loaded with a percentage of fibreglass of about 10%, allows to achieve an optimal fixing of the thermoplastic elastomer with which the padding is made, especially in the case of SBS material.

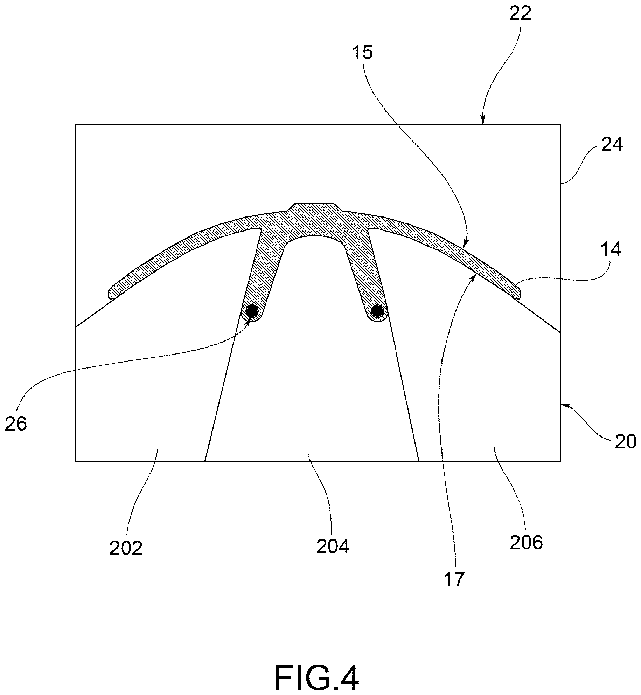

Figure 4 shows a step of making the shell 14. According to a possible embodiment, the shell 14 may be made by injection moulding in a mould 22 comprising the punch 20 and a second die 24.

As it may be seen in the Figures, the punch 20 may be made with inserts 202, 204, 206 so as to create particular undercuts and allow the extraction of the shell from the mould. Such type of equipment is *per se* known to those skilled in the art and therefore it will not be further explored.

In the same manner, the ducts for feeding the polymer into the mould cavity are not shown, since they are elements *per* se known to those skilled in the art as well.

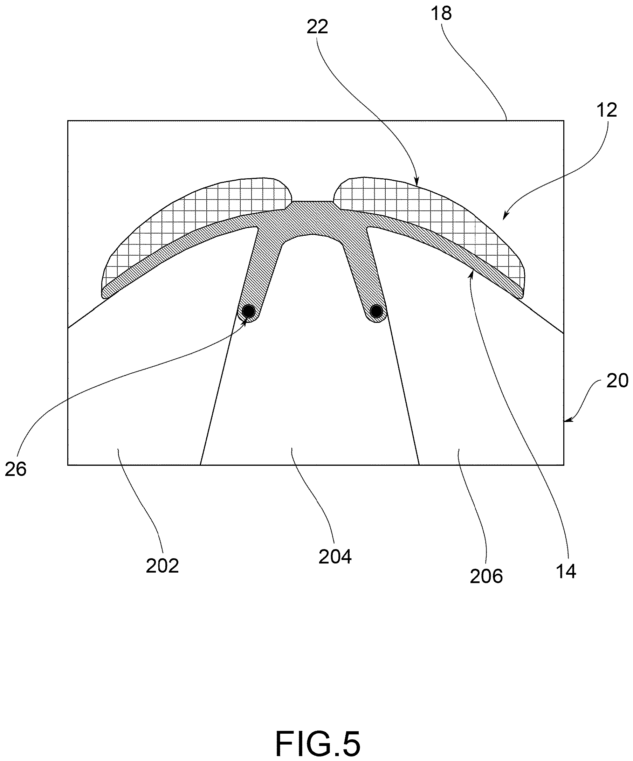

Once the shell 14 is made, the mould is opened and the second die 24 is replaced with the matrix 18 to injection mould the padding 22. This mode is shown, for example, in Figure 5, in which it may be noticed that the punch 20 is the same, while the shape of the die 18, which has now a countershape with respect to the padding 22, has changed.

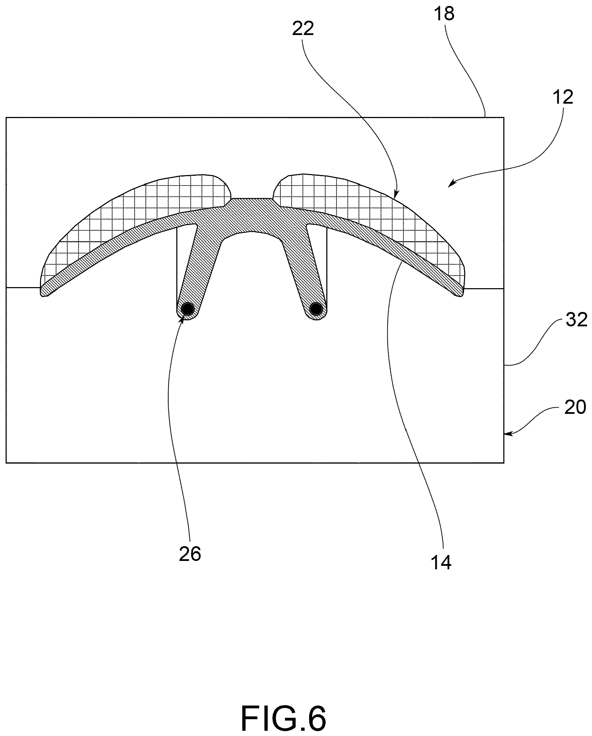

In Figure 6, on the other hand, an alternative embodiment is shown, in which the shell 14, once made, is removed from the mould 16 and is positioned in a second punch 32, next prepared with a second die 24.

In this case, the shell 14 is therefore made by injection moulding inside a dedicated mould and is subsequently placed inside the mould comprising the die 24 adapted to make the padding 22.

From the point of view of the manufactured saddle, the two methods are substantially equivalent. From a production point of view, the second method allows to divide the moulding times on two machines, with the possibility of further reducing the production times, and of creating a certain quantity of frame-shell subsets stock which may then be over moulded in another machine.

According to a possible embodiment, the shell 14 may be made by injection moulding, over moulding a frame 26.

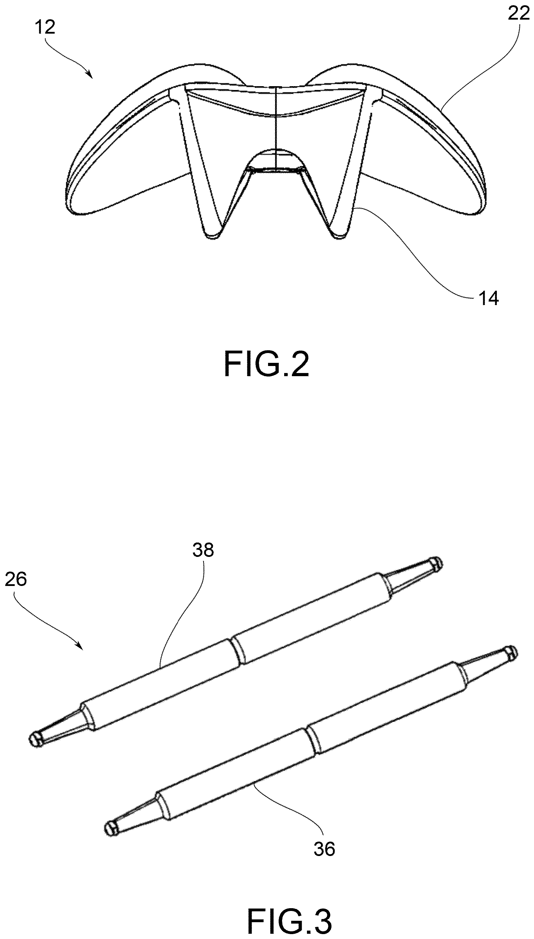

Figure 3 shows a possible embodiment of a frame 26. In particular, the frame 26 may comprise two bars 36, 38, which may be made of metal, thermoplastic material, and/or composite material.

Advantageously, said bars may be made of C40.

As it may be seen in Figure 3, the bars 36, 38 may comprise tapered ends, arranged with radial projections adapted to allow a better adhesion to the thermoplastic material of the shell.

The advantages which may be achieved with a method of making a saddle and the related saddle according to the present invention are therefore evident.

First of all, the method, and therefore the materials used, allow to improve the performance of the product, especially in terms of comfort.

Furthermore, they allow to increase the eco-sustainability and the recycling of the materials used.

The operations required to the operators during the manufacturing of the saddle significantly decrease.

In addition, production costs significantly decrease since cycle times significantly decrease.

In this regard, the time required for the moulding cycle of a saddle 12, according to the method of the present invention, is a very short time, of the order of one minute. Therefore, the cycle time is significantly lower than the cycle time of about six minutes required in the case of polyurethane padding.

Furthermore, a method of making a saddle and a related saddle have been made available, which allow to obtain a saddle more comfortable with respect to current saddles made with polyurethane foam. In particular, a saddle adapted to accompany, in an integral manner, the translation of the pelvis/ischial bones of the user during use.

Furthermore, a method has been made available in which, by modifying some additives used during the injection moulding, it is possible to control the mechanical properties of the outer surface of the saddle, without thereby significantly changing the properties of the material of which the inner core of the padding is made.

## Claims

1. Method of making a saddle (12) comprising a shell (14) and a padding (22) comprising the steps of:
(a) arranging a shell (14) in thermoplastic polymer inside a mould (16) for injection moulding, comprising a die (18) and a punch (20, 32); said shell (14) comprising a support surface (15), which in use faces said padding (22), and a supporting surface (17); said supporting surface (17) being coupled to an inner wall of said punch (20, 32) or said die (18), said support surface (15) forming a wall of the moulding cavity;
(b) closing the mould (16);
(c) making a padding (22) by injection moulding a thermoplastic polymer over said shell (14), between said support surface (15) and said mould (16);
**characterized in that**
said padding (22) is made by co-injection moulding of a coating (28) which forms an outer coating of said padding (22) and which forms the contact with the surface of said shell (14); and an inner core (30) of reduced hardness.

2. Method of making a saddle (12) according to claim 1, **characterised in that** the polymer used in step (c) is a thermoplastic elastomer TPE.

3. Method of making a saddle (12) according to any one of the preceding claims, **characterised in that** the polymer used in step (c) is a SBS rubber.

4. Method of making a saddle (12) according to any of the preceding claims, **characterised in that** said coating (28) has a hardness between 5 and 60 shore A, and said inner core (30) a hardness between 0 and 5 shore A, preferably 0 shore A.

5. Method of making a saddle (12) according to any of the preceding claims, **characterised in that** said shell (14) is made by injection moulding in a mould (22) comprising the punch (20) and a second die (24).

6. Method of making a saddle (12) according to any one of the claims 1-4, **characterised in that** said shell (14) is made by injection moulding inside a dedicated mould and is subsequently placed inside the mould (16).

7. Method of making a saddle (12) according to any of the preceding claims, **characterised in that** it comprises a step in which the shell (14) is made by injection moulding, over moulding a frame (26).

8. Method of making a saddle (12) according to any one of the preceding claims, **characterised in that** said shell (14) is made of copolymer polypropylene loaded with a percentage of fibreglass between 5% and 15%, preferably around 10%.

9. Saddle (12) comprising a shell (14) and a padding (22); said shell being made of thermoplastic polymer comprising a support surface (15) which, in use, faces said padding (22) and a supporting surface (17), said padding (22) being made by means of a thermoplastic polymer injection moulded directly onto said support surface (15) of said shell (14); **characterized in that** said padding (22) is made by co-injection moulding of a coating (28) which forms an outer coating of said padding (22) and which forms the contact with the surface of said shell (14); and an inner core (30) of reduced hardness.

10. Saddle (12) according to the preceding claim, **characterised in that** said shell (14) is made of copolymer polypropylene loaded with a percentage of fibreglass between 5% and 15%, preferably around 10%.

11. Saddle (12) according to any of the claims 9 -10, **characterised in that** said padding (22) is made of thermoplastic elastomer TPE, preferably an SBS rubber.

12. Saddle (12) according to any of the claims 9 -11, **characterised in that** said padding comprises a coating (28) which forms an outer coating of said padding (22) and which forms the contact with the surface of said shell (14); and an inner core (30) of reduced hardness.

13. Saddle (12) according to the preceding claim, **characterised in that** said coating (28) has a hardness between 5 and 60 shore A, and said inner core (30) a hardness between 0 and 5 shore A, preferably 0 shore A.

## Patentansprüche

1. Ein Verfahren zur Herstellung eines Sattels (12), der eine Trägerschale bzw Schale (14) und eine Polsterung (22) umfasst, die folgenden Schritte umfassend:
(a) Anordnen einer Schale (14) aus thermoplastischem Polymer in einer Form (16) zum Spritzgießen, umfassend eine Matrize (18) und einen Stempel (20, 32); wobei die genannte Schale (14) eine Stützfläche (15) umfasst, die, im Einsatz, der genannten Polsterung (22) zugewandt ist, und eine stützende Fläche (17) umfasst; wobei die genannte stützende Fläche (17) mit einer Innenwand des genannten Stempels (20, 32) oder der genannten Matrize (18) gekoppelt ist, wobei die genannte Stützfläche (15) eine Wand des Formhohlraums bildet;
(b) Schließen der Form (16);
(c) Herstellen einer Polsterung (22) durch Spritzgießen eines thermoplastischen Polymers über die genannte Schale (14) zwischen der genannten Stützfläche (15) und der genannten Form (16);
**dadurch gekennzeichnet, dass**
die genannte Polsterung (22) herstellt ist durch Co-Spritzgießen einer Beschichtung (28), die eine äußere Beschichtung der genannten Polsterung (22) bildet und die den Kontakt mit der Oberfläche der genannten Schale (14) herstellt; und
eines inneren Kerns (30) mit verringerter Härte.

2. Das Verfahren zur Herstellung eines Sattels (12) nach Anspruch 1, **dadurch gekennzeichnet, dass** das in Schritt (c) verwendete Polymer ein thermoplastisches Elastomer TPE ist.

3. Das Verfahren zur Herstellung eines Sattels (12) nach irgendeinem der vorstehenden Ansprüche, **dadurch gekennzeichnet, dass** das in Schritt (c) verwendete Polymer ein SBS-Gummi ist.

4. Das Verfahren zur Herstellung eines Sattels (12) nach irgendeinem der vorstehenden Ansprüche, **dadurch gekennzeichnet, dass** die genannte Beschichtung (28) eine Härte zwischen 5 und 60 Shore A, und der genannte innere Kern (30) eine Härte zwischen 0 und 5 Shore A, vorzugsweise 0 Shore A, aufweist.

5. Das Verfahren zur Herstellung eines Sattels (12) nach irgendeinem der vorstehenden Ansprüche, **dadurch gekennzeichnet, dass** die genannte Schale (14) durch Spritzgießen in einer Form (22) hergestellt wird, die den Stempel (20) und eine zweite Matrize (24) umfasst.

6. Das Verfahren zur Herstellung eines Sattels (12) nach irgendeinem der Ansprüche von 1 bis 4, **dadurch gekennzeichnet, dass** die genannte Schale (14) durch Spritzgießen in einer dedizierten Form hergestellt wird und anschließend in die Form (16) eingesetzt wird.

7. Das Verfahren zur Herstellung eines Sattels (12) nach irgendeinem der vorstehenden Ansprüche, **dadurch gekennzeichnet, dass** es einen Schritt umfasst, bei dem die Schale (14) durch Umspritzen eines Rahmens (26) hergestellt wird.

8. Das Verfahren zur Herstellung eines Sattels (12) nach irgendeinem der vorstehenden Ansprüche, **dadurch gekennzeichnet, dass** die genannte Schale (14) aus Copolymer-Polypropylen hergestellt ist, das mit einem Anteil an Glasfaser zwischen 5 % und 15 %, vorzugsweise etwa 10 %, beladen ist.

9. Ein Sattel (12), der eine Trägerschale bzw Schale (14) und eine Polsterung (22) umfasst; wobei die genannte Schale aus einem thermoplastischen Polymer hergestellt ist, umfassend eine Stützfläche (15), die, im Einsatz, der genannten Polsterung (22) zugewandt ist, und eine stützende Fläche (17), wobei die genannte Polsterung (22) mittels eines thermoplastischen Polymers hergestellt ist, das direkt auf die genannte Stützfläche (15) der genannten Schale (14) spritzgegossen ist;
**dadurch gekennzeichnet, dass**
die genannte Polsterung (22) hergestellt ist durch Co-Spritzgießen einer Beschichtung (28), die eine äußere Beschichtung der genannten Polsterung (22) bildet und den Kontakt mit der Oberfläche der genannten Schale (14) herstellt,
und eines inneren Kerns (30) mit verringerter Härte.

10. Der Sattel (12) nach dem vorstehenden Anspruch, **dadurch gekennzeichnet, dass** die genannte Schale (14) aus Copolymer-Polypropylen hergestellt ist, das mit einem Anteil an Glasfasern zwischen 5 % und 15 %, vorzugsweise etwa 10 %, beladen ist.

11. Der Sattel (12) nach einem der Ansprüche 9 bis 10, **dadurch gekennzeichnet, dass** die genannte Polsterung (22) aus thermoplastischem Elastomer TPE, vorzugsweise einem SBS-Gummi, besteht.

12. Der Sattel (12) nach einem der Ansprüche von 9 bis 11, **dadurch gekennzeichnet, dass** die genannte Polsterung eine Beschichtung (28), die eine äußere Beschichtung der Polsterung (22) bildet und den Kontakt mit der Oberfläche der Schale (14) herstellt; und einen inneren Kern (30) mit verringerter Härte umfasst.

13. Der Sattel (12) nach dem vorstehenden Anspruch, **dadurch gekennzeichnet, dass** die genannte Beschichtung (28) eine Härte zwischen 5 und 60 Shore A und der innere Kern (30) eine Härte zwischen 0 und 5 Shore A, vorzugsweise 0 Shore A, aufweist.

## Revendications

1. Procédé de fabrication d'une selle (12) comprenant une coque (14) et un rembourrage (22) comprenant les étapes consistant à :
(a) agencer une coque (14) en polymère thermoplastique à l'intérieur d'un moule (16) pour moulage par injection, comprenant une matrice (18) et un poinçon (20, 32) ; ladite coque (14) comprenant une surface de support (15), qui en utilisation fait face audit rembourrage (22), et une surface d'appui (17) ; ladite surface d'appui (17) étant couplée à une paroi interne dudit poinçon (20, 32) ou de ladite matrice (18), ladite surface de support (15) formant une paroi de la cavité de moulage ;
(b) fermer le moule (16) ;
(c) fabriquer un rembourrage (22) par moulage par injection d'un polymère thermoplastique sur ladite coque (14), entre ladite surface de support (15) et ledit moule (16) ;
**caractérisé en ce que**
ledit rembourrage (22) est fabriqué par co-moulage par injection d'un revêtement (28) qui forme un revêtement externe dudit rembourrage (22) et qui forme le contact avec la surface de ladite coque (14) ; et d'un noyau interne (30) de dureté réduite.

2. Procédé de fabrication d'une selle (12) selon la revendication 1, **caractérisé en ce que** le polymère utilisé à l'étape (c) est un élastomère thermoplastique, TPE.

3. Procédé de fabrication d'une selle (12) selon l'une quelconque des revendications précédentes, **caractérisé en ce que** le polymère utilisé à l'étape (c) est un caoutchouc SBS.

4. Procédé de fabrication d'une selle (12) selon l'une quelconque des revendications précédentes, **caractérisé en ce que** ledit revêtement (28) a une dureté entre 5 et 60 Shore A, et ledit noyau interne (30) une dureté entre 0 et 5 Shore A, de préférence 0 Shore A.

5. Procédé de fabrication d'une selle (12) selon l'une quelconque des revendications précédentes, **caractérisé en ce que** ladite coque (14) est fabriquée par moulage par injection dans un moule (22) comprenant le poinçon (20) et une seconde matrice (24).

6. Procédé de fabrication d'une selle (12) selon l'une quelconque des revendications 1 à 4, **caractérisé en ce que** ladite coque (14) est fabriquée par moulage par injection à l'intérieur d'un moule dédié et est ensuite placée à l'intérieur du moule (16).

7. Procédé de fabrication d'une selle (12) selon l'une quelconque des revendications précédentes, **caractérisé en ce qu'**il comprend une étape dans laquelle la coque (14) est fabriquée par moulage par injection, surmoulage d'un châssis (26).

8. Procédé de fabrication d'une selle (12) selon l'une quelconque des revendications précédentes, **caractérisé en ce que** ladite coque (14) est en polypropylène copolymère chargé d'un pourcentage de fibres de verre entre 5 % et 15 %, de préférence à peu près 10 %.

9. Selle (12) comprenant une coque (14) et un rembourrage (22) ; ladite coque étant en polymère thermoplastique comprenant une surface de support (15) qui, en utilisation, fait face audit rembourrage (22) et une surface d'appui (17), ledit rembourrage (22) étant fabriqué au moyen d'un polymère thermoplastique moulé par injection directement sur ladite surface de support (15) de ladite coque (14) ; **caractérisée en ce que** ledit rembourrage (22) est fabriqué par co-moulage par injection d'un revêtement (28) qui forme un revêtement externe dudit rembourrage (22) et qui forme le contact avec la surface de ladite coque (14) ; et d'un noyau interne (30) de dureté réduite.

10. Selle (12) selon la revendication précédente, **caractérisée en ce que** ladite coque (14) est en polypropylène copolymère chargé d'un pourcentage de fibres de verre entre 5 % et 15 %, de préférence à peu près 10 %.

11. Selle (12) selon l'une quelconque des revendications 9 et 10, **caractérisée en ce que** ledit rembourrage (22) est en élastomère thermoplastique, TPE, de préférence un caoutchouc SBS.

12. Selle (12) selon l'une quelconque des revendications 9 à 11, **caractérisée en ce que** ledit rembourrage comprend un revêtement (28) qui forme un revêtement externe dudit rembourrage (22) et qui forme le contact avec la surface de ladite coque (14) ; et un noyau interne (30) de dureté réduite.

13. Selle (12) selon la revendication précédente, **caractérisée en ce que** ledit revêtement (28) a une dureté entre 5 et 60 Shore A, et ledit noyau interne (30) une dureté entre 0 et 5 Shore A, de préférence 0 Shore A.
